# EUROPEAN PATENT APPLICATION

(11) **EP 3 173 996 A1**
(43) Date of publication of application: **31.05.2017**
(21) Application number: 15196877.3
(22) Date of filing: 27.11.2015
(51) Int. Cl.: G06Q 20/06, G06Q 20/36, G06Q 20/40, G06Q 20/28, G06Q 20/34

(54) **PAYMENT DEVICE CONTROL**

(71) Applicant: Mastercard International Incorporated, Purchase NY 10577 (US)
(72) Inventor: VORA, Neeraj, Dublin, 18 (IE); KAPOOR, Ravi, Dublin, 18 (IE)
(74) Representative: Lawrence, Richard Anthony

(57) **Abstract**

A method for restricting a payment device for use with a selectable set of merchants, the method comprising: receiving from an agent a request to restrict a payment device that has been enabled for restriction for use with a selectable set of merchants only; providing to the agent means to select a set of merchants to which use of the payment device is to be restricted; detecting a set of merchants selected by the agent; and restricting the payment device for use with the set of merchants selected by the agent.

## Description

### Field of the Invention

The invention relates to a payment processing system, and in particular, but not exclusively, to a payment processing system for a pre-paid payment device.

### Background to the Invention

Various schemes are underway to promote payment cards as a default choice for completing transactions. Payment cards offer benefits over cheques, vouchers and the like, as they enable merchants to obtain funds almost immediately, whilst also offering convenience for the user.

One remaining area in which payment cards are just beginning to replace traditional payment means relates to pre-paid payment devices that are restricted for use with a specific group, or 'whitelist', of participating merchants. For example, the merchants may be offering incentives or discounts, or alternatively the whitelist may be based on approved merchants, for example for corporate spending.

Traditionally, where payment is to be restricted to a whitelist of merchants vouchers are used as a payment means, for example gift vouchers for use in particular retail outlets. In another example, vouchers are sometimes issued by insurance companies to pay out insurance claims made in respect of damaged or stolen goods. Typically, a customer is offered a choice between, for example, 60% of the replacement value of the goods in cash, or 100% of the replacement value in vouchers, therefore giving the customer an incentive to choose the vouchers. Vouchers include security codes and other security measures to ensure proper use, and so are inherently relatively secure.

Pre-paid payment cards that are restricted to the merchant whitelist have been used in place of vouchers. Such cards do not incorporate a credit facility and are not linked to a bank account. Instead, the pre-paid card is associated with a digital wallet that can be loaded with funds and can be debited by an acquirer on behalf of a merchant. The wallet may be 'open-loop', meaning that the wallet architecture is centralised and configurable for use with any merchant, or 'closed loop', where the wallet is hosted on a dedicated platform that is associated with one or more specific merchants.

Payment cards are produced by issuing banks, or 'issuers', each of which produces a range of card products. Each card product defines the way in which individual payment cards issued under that card product are to be used, which is controlled by creating and maintaining authorisation rules, typically at a bank identification number (BIN) level or, more specifically, at a BIN range level. For example, an issuer may have one card product that is a closed loop pre-paid payment card for use only at a specific retail chain, and another card product that can be used with ten specific different merchants. If the BIN for that issuer is, for example, 555555, cards issued under the first product may have numbers ranging from 555555000000001 to 555555100000000, and cards issued under the second product may have numbers ranging from 555555100000001 to 555555200000000. Therefore, many individual payment cards may be issued under each card product, each individual card having the same restrictions as all other cards configured under the same card product.

The composition of merchants on the whitelist alters over time as promotions come to an end or business relationships change. The whitelist can change quite rapidly, and so card products can become outdated relatively quickly. New card products can be created to react to the changing whitelist; however, this may not be practical if the whitelist changes too regularly.

Moreover, if individual payment cards are distributed to customers through an intermediary such as an insurance company, as in the above example, the delay introduced between issuance and the customer receiving the card may mean that the card restrictions are obsolete by the time the payment card reaches the customer. This means that, for example, the customer will not be able to take advantage of contemporary merchant offers which commenced after the payment card was created, or that merchants that the customer expects to accept the card will decline transactions.

After a certain period has elapsed, the whitelist changes to such an extent that card products restricted according an earlier version of the whitelist become redundant. This defines an effective window for distributing individual payment cards under a particular card product to customers, which means that card issuers have to anticipate demand for each card product to avoid wastage.

It is against this background that the present invention has been devised.

### Summary of the Invention

According to a first aspect of the disclosure, there is provided a method for restricting a payment device for use with a selectable set of merchants, the method comprising:
receiving from an agent a request to restrict a payment device that has been enabled for restriction for use with a selectable set of merchants only; providing to the agent means to select a set of merchants to which use of the payment device is to be restricted; detecting a set of merchants selected by the agent; and restricting the payment device for use with the set of merchants selected by the agent.

The agent may be a distributor of payment devices such as, for example, an insurer which provides payment devices in the form of pre-paid payment cards to customers to compensate insurance claims, as in the above example. The method of this aspect of the invention enables such an agent to configure each payment device in a bespoke manner according to each customer's individual needs, taking into account the availability of merchants at the time the device is configured. This avoids having to configure payment devices in batches in advance of delivery to customers, which results in the devices having reduced usefulness for the customer and potentially being almost redundant.

Restricting the payment device may comprise creating or updating a configuration file associated with the payment device, in which case creating or updating the configuration file may comprise storing within the configuration file identities of each merchant of the set selected by the agent. Alternatively, or in addition, creating or updating the configuration file may comprise storing within the configuration file an identity of one or more pre-defined sub-sets of merchants selected by the agent.

Providing the agent means to select a set of merchants may comprise presenting to the agent a list of merchants from which a set of merchants can be selected.

In some embodiments, the method comprises determining whether the payment device is enabled for restriction for use with a selectable set of merchants.

In another aspect, the disclosure also extends to a method for authenticating a payment device transaction, the method comprising: receiving a transaction request from a merchant; determining whether the payment device has been restricted for use with a selected set of merchants only, and the identity of each merchant of the selected set; comparing the identity of the merchant from which the transaction request originated with the identity of each merchant of the set; and declining the transaction request if the identity of the merchant from which the transaction request originated does not match any of the identities of the merchants of the set.

Determining whether the payment device associated with the transaction request has been restricted for use with a selected set of merchants only may comprise determining whether the payment device is enabled for restriction. Determining whether the payment device is enabled for restriction may comprise reading a configuration file associated with the payment device.

By checking transaction requests to determine whether they originate from payment devices that are enabled for selective restriction for use with specified merchants, a process for authentication the use of such a device can be triggered. This method therefore provides a convenient means for authorising transactions generated by payment devices that have been restricted using the method of the above aspect of the invention, for example.

The method may comprise analysing the transaction request to obtain a device ID by which to identify the payment device.

In some embodiments, the method comprises analysing the transaction request to obtain a merchant ID by which to identify the merchant from which the transaction request originated.

The method may comprise analysing the transaction request to obtain an acquirer ID indicating the identity of an acquirer associated with the merchant in which case the method may further comprise determining whether the payment device is enabled for use with the acquirer identified by the acquirer ID, and declining the transaction request if the payment device is not enabled for use with the acquirer.

The method may comprise analysing the transaction request to obtain a terminal ID indicating the identity of a terminal from which the transaction request originated.

In the methods of either of the above aspect, the payment device may be a payment card, and may be associated with a digital wallet that can be loaded with funds.

In a further aspect, the disclosure also extends to a payment processing system comprising an authorisation module, the authorisation module being arranged to: receive a transaction request from a merchant; determine whether the payment device has been restricted for use with a selected set of merchants only and the identity of each merchant of the selected set; compare the identity of the merchant from which the transaction request originated with the identity of each merchant of the set; and decline the transaction request if the identity of the merchant from which the transaction request originated does not match any of the identities of the merchants of the set.

The disclosure also extends to a method for issuing a payment device that is enabled for subsequent restriction for use with a selectable set of merchants only. The method comprises creating the payment device, and defining configuration data associated with the payment device. The configuration data indicates the properties of the payment device, and comprises data that indicates that the payment device is enabled for subsequent restriction for use with a selectable set of merchants only.

It will be appreciated that preferred and/or optional features of the first aspect of the invention may be incorporated alone or in appropriate combination in the second aspect of the invention also.

### Brief Description of the Drawings

In order that the invention may be more readily understood, preferred non-limiting embodiments thereof will now be described, by way of example only, with reference to the accompanying drawings, in which:
Figure 1 is a schematic diagram of an architecture for a payment system for processing transaction requests according to an embodiment of the invention;
Figure 2 is a flow diagram showing a process according to an embodiment of the invention for restricting use of a payment card for use in the payment system of Figure 1; and
Figure 3 is a flow diagram showing a process according to an embodiment of the invention for authorising transaction requests relating to a restricted payment card.

### Detailed Description of Embodiments

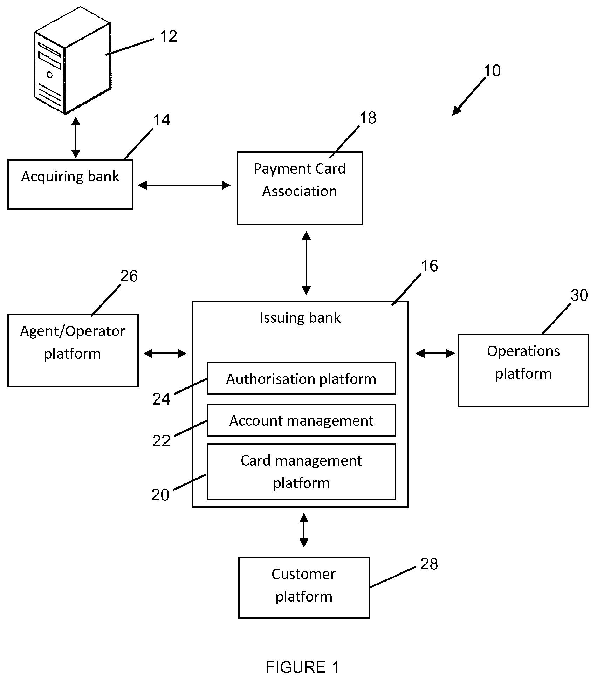

Figure 1 shows an overall architecture for a payment system 10 for processing transaction requests for a pre-paid payment card. Although the following description refers only to payment cards, it should be noted that embodiments of the invention are suitable for use with other types of payment devices, such as 'smartphones' or 'smartwatches', for example.

As shown, the payment system 10 includes merchant terminals 12 at which a payment card may be used to settle a transaction, for example a point of sale such as a shop checkout. Alternatively, the terminal 12 may be a virtual point of sale for e-commerce transactions. For simplicity, a single terminal 12 is shown in Figure 1, but the skilled reader will appreciate that several thousands of terminals 12 may be connected to a single payment system 10.

The terminal 12 is in communication with an acquiring bank, or 'acquirer' 14, associated with the merchant to which the terminal 12 belongs. The acquirer 14 operates on behalf of the merchant to obtain funds to settle transaction requests once those requests are authorised.

Funds are obtained from an issuing bank, or 'issuer' 16, which is a bank that issued the payment card originally. The issuer 16 holds details relating to the card, and also hosts a digital wallet associated with the payment card, the wallet holding funds for use in settling transactions. As noted above, the wallet may be of either the open loop or closed loop type.

The acquirer 14 communicates with the issuer 16 through a payment network 18, of which the Applicant is an example. The payment network 18 operates a payment scheme that defines rules governing transactions between the acquirer 14 and the issuer 16.

The system 10 shown in Figure 1 therefore operates according to the so-called 'four party model', in which the merchant and the customer each have a relationship with a different bank: the customer with the issuer 16; and the merchant with the acquirer 14. Typically, to complete a transaction the acquirer 14 delivers funds to the merchant very shortly after the transaction is authorised; although in some cases delivery of funds can take several days or even weeks. The issuer 16 then reimburses the acquirer 14 over a slightly longer period, for example one or two days. This approach can enable the merchant to obtain funds almost immediately when a transaction completes, which is one advantage of payment cards. Other advantages of using payment cards instead of cash or cheques include reduced cash management activities, an increased customer base, and increased security of funds.

The issuer 16 hosts three internal software platforms for handling transaction requests, namely a card management platform 20, an account management platform 22, and an authorisation platform 24.

The card management platform 20 is used for issuing individual payment cards and for subsequent management of those cards throughout their lifecycle. Such management may include replacement or reissuance of cards, and inventory management, for example.

The account management platform 22 hosts and manages an account that is accessed via the payment card for completing transactions. In this embodiment, the account is a digital wallet as noted above. The account management module manages the balance of funds held in the wallet, including debiting the wallet for settling transactions. Account related fees and fund management activities associated with the card are also handled by the account management module. Typical fund management activities may include: posting of transactions on each account or digital wallet; charging of fees associated with transactions or issuance; charging periodic fees; and loading funds onto a payment card.

The account management platform 22 also holds configuration data in the form of a configuration file, the configuration data defining authorisation rules that govern usage of the card. In this embodiment, the configuration file includes data indicating whether the payment card has been enabled for restriction for exclusive use with a user-selectable set of merchants only, and the identities of those merchants if restriction is enabled.

The authorisation platform 24 is a software module that is arranged to receive, process and authorise or decline incoming transaction requests by comparing data in each transaction request with data held in the account management platform 22; in particular the authorisation rules defined in the configuration file associated with the payment card. Once authorised, transaction requests are forwarded to the account management platform 22 which releases funds from the digital wallet to settle the transactions.

Known payment systems typically include an authorisation platform 24 or module of some kind. However, unlike known systems the authorisation platform 24 of this embodiment is configured to perform a pre-screening process on each transaction request to determine whether the payment card associated with the transaction request is enabled for restriction for exclusive use with selected merchants, or 'real-time whitelisting'. If real-time whitelisting is enabled, the authorisation is further arranged to verify whether the merchant from which the transaction request originated is one of the merchants with which the payment card is enabled for use.

The issuer 16 communicates with three different external platforms, each facilitating a specific type of interaction with a respective external party.

The first of these platforms is an agent/operator platform 26, which relates to users or 'agents' that distribute individual payment cards once the cards have been issued to them by the issuer 16. For example, the agent may be an insurance company, as mentioned in the example above. Alternatively, the agent may be a branch of the issuing bank.

As will be explained in more detail in the description that follows, distributing the individual cards involves configuring each card for restricted use with a selected group of merchants. The group of merchants is selected from a list of available merchants on a card-by-card basis. The agent/operator platform 26 provides a user interface and associated functionality to enable an agent to make a selection of merchants to restrict usage of the payment card.

It is noted that although in this embodiment it is the issuer 16 that provides the functionality for an agent to configure a payment card, in other embodiments another party such as a local branch of the issuer 16, an agent or the payment network 18 may provide these facilities.

The second platform is a customer platform 28 which hosts facilities for enabling interaction with the customers, for example to enable customers to perform inquiries on their card or account, perform transactions, or log service requests for dealing with customer problems.

Thirdly, an operations platform 30 is provided for managing and updating data and algorithms used by the issuer 16 in processing transaction requests.

In summary, the system architecture shown in Figure 1 provides a complete communications infrastructure for processing and completing financial transactions. Transaction requests generated by merchants when a customer presents a payment card for completing a sale are routed through the acquirer 14 to the issuer 16 via the payment network 18. The issuer 16 is equipped with a suite of platforms that enable it to authorise the transaction and process the transfer of funds to the acquirer 14. In this embodiment, the issuer platforms are configured to check each transaction request for whether the associated payment card has been enabled for real-time whitelisting, and if so to account for this restriction when authorising the transaction request.

Each transaction request is composed of transaction data and payment card data. The transaction data includes information such as a terminal ID identifying the terminal 12 that generated the request, a merchant ID identifying the merchant to which the terminal 12 belongs, and an acquirer ID identifying the acquirer 14 that the merchant is registered with and to which the transaction request should be directed. The transaction data also includes information regarding the purchase such as the transaction amount.

The payment card data includes a unique card number, typically referred to as a Primary Account Number (PAN), that is unique to the individual payment card, typically 16 digits in length, the first six digits of which are a 'bank identification number' (BIN), also known as the 'issuer identification number' (IIN). The BIN enables the payment network 18 to direct the transaction request to the correct issuer 16. The issuer 16 can cross-reference the unique card number to determine other information relating to the payment card such as a card product under which the payment card was issued, and an indication of whether the card is enabled for restriction to selected merchants.

The payment card has a memory that stores the payment card data. For example, the memory may be implemented as a magnetic strip, as an electronic chip, or both. When the payment card is presented at a terminal 12 for settling a transaction, the payment card data is read by the terminal 12. In the case of e-commerce, the payment card data can be entered into a virtual terminal, typically a merchant webpage, by the customer. The payment card data is compiled with the transaction data that is provided by the terminal 12, to generate a new transaction request.

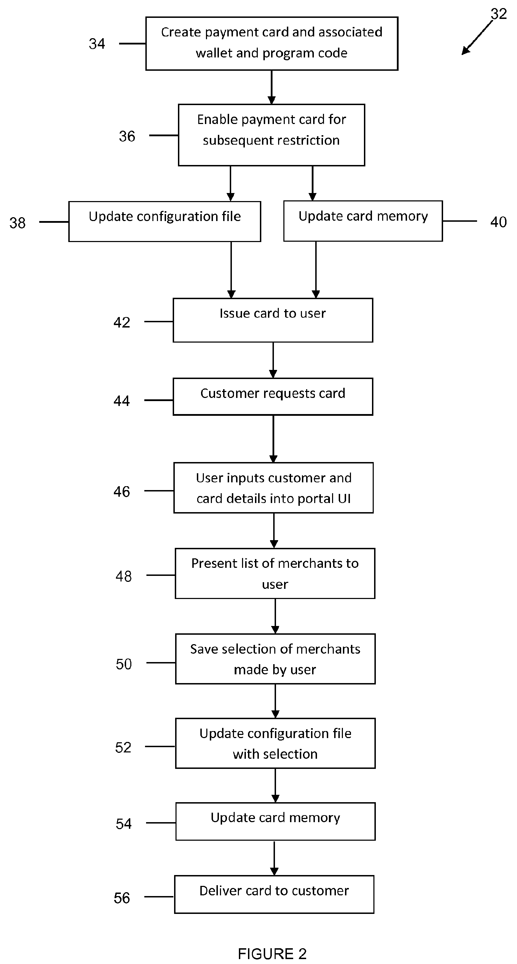

Referring now to Figure 2, a process 32 for configuring a payment card for restricted use with a user-selectable set of merchants is shown. In this embodiment, the entire process 32 is performed by an issuer 16. However, in other embodiments more than one party may be involved in completing the process 32.

The process 32 begins when a new payment card is created, or 'issued' by the issuer 16 at step 34. Issuing the card involves defining a unique card ID and associating the card ID with a respective digital wallet and configuration file according to a card product under which the payment card is created. The digital wallet and/or the configuration file may have to be created as part of the issuing step, or alternatively generic wallets and/or files may be created in advance and so only require assignment to the payment device. As noted above, the digital wallet and configuration file are hosted by the account management platform 22 of the issuer 16.

Once the card has been created, to complete the issuing process the card is enabled at step 36 for real-time whitelisting, i.e. subsequent restriction of the card for exclusive use with a user-selectable set of merchants. In this embodiment, enabling real-time whitelisting entails updating at step 38 the configuration file associated with the payment card to include an indicator that the payment card is enabled for restriction. Optionally, a corresponding update to the card memory may be performed in parallel at step 40. The card is then issued at step 42 to the agent, which as noted above may be a local branch of the issuer 16, or another party such as an insurance company.

At this stage, no restrictions have been applied to the payment card; instead it is enabled for selective restriction by an agent at a later stage. The payment card is therefore a generic card that can be configured appropriately and in a bespoke manner for a range of customers.

The payment card is held in stock by the agent until a customer requests at step 44 a new payment card. The agent then configures the card appropriately for the customer by accessing a user interface of an agent portal, which is a software module hosted by the agent/operator platform 26 of the issuer 16. Specifically, the agent inputs at step 46 into the portal both customer details and card details, which enables the agent/operator platform 26 to identify the payment card that is to be configured.

There are various ways in which the agent can be provided with means for selecting a set of merchants to which use of the payment device can be restricted. For example, the user interface could allow the agent to enter the details of any merchant, for example a merchant ID and an acquirer ID associated with the merchant. The agent can then check whether that merchant is available for selective restriction and proceed accordingly.

In this embodiment, however, a list of merchants is presented at step 48 to the agent via the user interface, from which the agent can select a set of merchants to which use of the payment card will be restricted. Sub-lists of merchants may be offered to simplify the selection process. For example, a sub-list containing merchants belonging to a common category such as groceries may be provided, and selecting this sub-list adds each of the merchants within the sub-list to the set of merchants that the payment card can be used with.

Each merchant has an associated merchant ID value which it is noted may not be unique. Therefore, each merchant ID combines with a corresponding acquirer ID indicating an acquirer 14 with which the merchant is associated, to create a unique identifier that accurately identifies the merchant within the payment system 10. A sub-list of merchants may also be identified with a single merchant ID. The agent selection of merchants is therefore represented by a set of merchant ID values and corresponding acquirer ID values.

The set of merchant ID and acquirer ID values is saved at step 50 by the portal and passed to the account management platform 22 of the issuer 16, along with the card ID relating to the payment card with which the merchants are to be associated. The set of merchant ID and acquirer ID values is added at step 52 to the configuration file associated with the payment card to be used subsequently for authorising transaction requests associated with the payment card, as described in more detail below.

In this embodiment, the card memory is also updated at step 54 to include the list of merchant IDs representing the selection made by the agent. At this stage, the configuration process is complete and the payment card is delivered at step 56 to the customer.

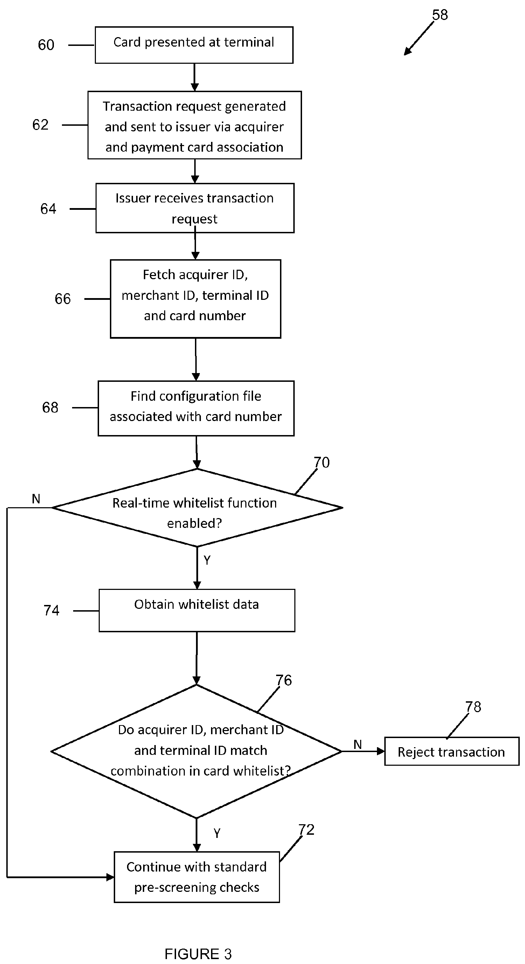

Moving on to Figure 3, a process 58 for authorising transaction requests associated with a payment card configured according to the process of Figure 2 is shown.

The authorisation process 58 begins when the payment card is presented at step 60 at a terminal 12, for example a point of sale in a retail outlet. The payment card is scanned by the terminal 12 to extract payment card data, in particular the card ID, which is compiled at step 62 with transaction data into a transaction request as described above. The transaction request is sent to the issuer 16 via the acquirer 14 and the payment network 18.

The transaction request is received at step 64 by the issuer authorisation platform 24, which analyses the transaction request to obtain at step 66: an acquirer ID identifying the acquirer 14 that the transaction request was received from; a merchant ID identifying the merchant that owns the terminal 12 at which the transaction request was generated; and a terminal ID identifying the terminal 12. The unique card ID is also extracted from the transaction request, which enables the authorisation platform 24 to find at step 68 the configuration file associated with the payment card.

The authorisation platform 24 then performs a pre-screening check to determine at step 70 from the configuration file whether the payment card is enabled for real-time whitelisting, and if so, whether real-time whitelisting has been enabled. If not, the process moves on to perform at step 72 standard authorisation checks without considering merchant restrictions. It is noted at this stage that a payment card that has been enabled for real-time whitelisting may not ever be restricted, and may thus operate as a generic pre-paid payment card for use with any merchant. This further increases the versatility of the payment cards produced using the process of Figure 2.

Returning to Figure 3, if real-time whitelisting is enabled, whitelist data including the list of merchant IDs and associated acquirer IDs, and optionally terminal IDs, is then obtained at step 74 by reading the appropriate portion of the configuration file. The whitelist data is then compared at step 76 with the data contained in the transaction request to determine whether the acquirer ID, terminal ID and merchant ID contained in the transaction request have counterparts in the configuration file to indicate that the merchant from which the transaction request originated is one of the set of merchants with which the payment card can be used. If not, the authorisation platform 24 determines that the payment card is not permitted to be used at the merchant from which the transaction request originated, and denies at step 78 the transaction request. Otherwise, the whitelist checks are satisfied and the authorisation process moves on to other standard authorisation checks.

In overview, the processes 32, 58 shown in Figures 2 and 3 for enabling a payment card for real-time whitelisting, and then subsequent authorisation of transactions based on such a card, provide a means for issuing generic payment cards that can be restricted in an optimised way according to the customer to whom the card is to be delivered, and also the time of delivery. This ensures that the payment card is configured in the most appropriate manner for that customer, and avoids the problems with redundancy described above that arise where there is a delay between defining card restrictions and delivering the card to a customer.

It will be appreciated by a person skilled in the art that the invention could be modified to take many alternative forms to that described herein, without departing from the scope of the appended claims.

## Claims

1. A method for restricting a payment device for use with a selectable set of merchants, the method comprising:
receiving from an agent a request to restrict a payment device that has been enabled for restriction for use with a selectable set of merchants only;
providing to the agent means to select a set of merchants to which use of the payment device is to be restricted;
detecting a set of merchants selected by the agent; and
restricting the payment device for use with the set of merchants selected by the agent.

2. The method of claim 1, wherein restricting the payment device comprises creating or updating a configuration file associated with the payment device.

3. The method of claim 2, wherein creating or updating the configuration file comprises storing within the configuration file identities of each merchant of the set selected by the agent.

4. The method of claim 2 or claim 3, wherein creating or updating the configuration file comprises storing within the configuration file an identity of one or more pre-defined sub-sets of merchants selected by the agent.

5. The method of any preceding claim, wherein providing the agent means to select a set of merchants comprises presenting to the agent a list of merchants from which a set of merchants can be selected.

6. The method of any preceding claim, comprising determining whether the payment device is enabled for restriction for use with a selectable set of merchants.

7. A method for authenticating a payment device transaction, the method comprising:
receiving a transaction request from a merchant;
determining whether the payment device has been restricted for use with a selected set of merchants only, and the identity of each merchant of the selected set;
comparing the identity of the merchant from which the transaction request originated with the identity of each merchant of the set; and
declining the transaction request if the identity of the merchant from which the transaction request originated does not match any of the identities of the merchants of the set.

8. The method of claim 7, wherein determining whether the payment device associated with the transaction request has been restricted for use with a selected set of merchants only comprises determining whether the payment device is enabled for restriction.

9. The method of claim 8, wherein determining whether the payment device is enabled for restriction comprises reading a configuration file associated with the payment device.

10. The method of any of claims 7 to 9, comprising analysing the transaction request to obtain a device ID by which to identify the payment device.

11. The method of any of claims 7 to 10, comprising analysing the transaction request to obtain a merchant ID by which to identify the merchant from which the transaction request originated.

12. The method of any of claims 7 to 11, comprising analysing the transaction request to obtain an acquirer ID indicating the identity of an acquirer (14) associated with the merchant.

13. The method of claim 12, comprising determining whether the payment device is enabled for use with the acquirer (14) identified by the acquirer ID, and declining the transaction request if the payment device is not enabled for use with the acquirer (14).

14. The method of any of claims 7 to 13, comprising analysing the transaction request to obtain a terminal ID indicating the identity of a terminal (12) from which the transaction request originated.

15. The method of any preceding claim, wherein the payment device is a payment card.

16. The method of any preceding claim, wherein the payment device is associated with a digital wallet that can be loaded with funds.

17. A payment processing system (10) comprising an authorisation module, the authorisation module being arranged to:
receive a transaction request from a merchant;
determine whether the payment device has been restricted for use with a selected set of merchants only and the identity of each merchant of the selected set;
compare the identity of the merchant from which the transaction request originated with the identity of each merchant of the set; and
decline the transaction request if the identity of the merchant from which the transaction request originated does not match any of the identities of the merchants of the set.
